# EUROPEAN PATENT APPLICATION

(11) **EP 2 874 069 A1**
(43) Date of publication of application: **20.05.2015**
(21) Application number: 13816613.7
(22) Date of filing: 11.07.2013
(51) Int. Cl.: G06F 15/16, G06F 17/21

(54) **METHOD AND APPARATUS FOR MANAGING PERSONAL INFORMATION IN COMMUNICATION SYSTEM**

(30) Priority: 11.07.2012 KR 20120075798
(71) Applicant: Samsung Electronics Co., Ltd., Suwon-si, Gyeonggi-do 443-742 (KR)
(72) Inventor: OH, Gyu-Bong, Suwon-si Gyeonggi-do 443-742 (KR); KIM, Wuk, Suwon-si Gyeonggi-do 443-742 (KR); PU, Hyeon-Cheol, Suwon-si Gyeonggi-do 443-742 (KR)
(74) Representative: Nederlandsch Octrooibureau
(86) International application number: PCT/KR2013/006215
(87) International publication number: WO 2014/010969

(57) **Abstract**

The present invention relates to a method for managing personal information in a communication system for providing a converged address book (CAB) service, comprising the steps of: enabling a CAB user to generate a personal information restoration request comprising a document recognition value (XCAP URI) of a personal document stored in the CAB, current version information of the personal document, and property information indicating the personal document to be stored from the current version to the previous version, enabling a CAB user to transmit the restoration request through an arbitrary device to a server for managing the CAB; and enabling the CAB user to receive from the server, a response for informing of the personal document to be restored from the current version to the previous version, through the arbitrary device.

## Description

### BACKGROUND OF THE INVENTION

### 1. Field of the Invention

The present invention relates generally to a method and apparatus for managing personal information in a communication system that provides a Converged Address Book (CAB) service.

### 2. Description of the Related Art

A Converged Address Book (CAB) service that is a general single network-based address book service stores a single network address in a network, and improves an experience of a user and a function associated with the stored single network address book. In particular, various devices that may be manipulated by a user can access the single network address book regardless of a time and a place, and the synchronization is performed for this.

When restoration of a document where a change occurs due to modification, deletion, addition, and the like with respect to personal information used by a CAB user is required, a communication system that provides the CAB service requires a method that enables the user to readily restore the document.

### SUMMARY OF THE INVENTION

### Problems to be solved by the invention

Accordingly, an aspect of the present invention is to provide a user with an effective method and an apparatus for managing personal information by including a current version information value of a personal information XML (eXtensible markup language) document and information associated with a number of times of restoration in a request in a case of requesting restoration of the personal information XML document.

### Means for solving problems

In accordance with another aspect of the present invention, a method includes: generating, by a CAB user, a restoration request for restoring a personal document, which includes a document recognition value (XCAP URI) of a personal document stored in the CAB, current version information of the personal document, and property information instructing restoration of the personal document to a previous version of the current version; transmitting, by the CAB user, the restoration request to a server that manages the CAB through an arbitrary device; and receiving, by the CAB user, a response indicating that the personal document is restored to the previous version of the current version from the server through the arbitrary device.

In accordance with another aspect of the present invention, a method includes: receiving, from a CAB user, a restoration request for restoring a personal document that is stored in the CAB in advance; obtaining, from the restoration request, a document recognition value (XCAP URI) of the personal document, current version information of the personal document, and property information instructing restoration of the personal document to a previous version of the current version, and restoring the personal document to the previous version of the current version to correspond to the property information; and informing the CAB user of a response indicating a restoration result through an arbitrary device.

In accordance with another aspect of the present invention, an apparatus includes: a message generating unit to generate a restoration request for restoring a personal document, which includes a document recognition value (XCAP URI) of the personal document stored in the CAB, a current version of the personal document, property information instructing restoration of the personal document to a previous version of the current version, in response to an input by a CAB user; a transmitting unit to transmit the restoration request to a server that manages the CAB through an arbitrary device by the CAB user; and a receiving unit to receive, from the server, a response indicating that the personal document is restored to the previous version of the current version.

In accordance with another aspect of the present invention, an apparatus for managing personal information in a communication system that provides a Converged Address Book (CAB) service is provided. The apparatus includes: a receiving unit to receive, from a CAB user, a restoration request for restoring a personal document that is stored in the CAB in advance; a controller to obtain, from the restoration request, a document recognition value (XCAP URI) of the personal document, current version information of the personal document, and property information instructing restoration of the personal document to the previous version of the current version, and restoring the personal document to the previous version of the current version to correspond to the property information; and a transmitting unit to inform the CAB user of a response indicating a restoration result through an arbitrary device.

### EFFECTS

According to the embodiments of the present invention, when restoration of a personal information eXtensible markup language (XML) document which needs restoration is requested in a communication system that provides a CAB service, a request including a current version information value of the personal information XML document and information associated with a number of times of restoration is transferred, and a server that receives the request restores the personal information XML document based on the current version information value and the information associated with the number of times of restoration and thus, there is no need of a procedure in which a user obtains the corresponding personal information XML document so as to determine a previous version of the personal information XML document, and there is no need to perform restoration a predetermined number of times. Accordingly, a method that may enable the user to effectively manage personal information may be provided.

### BRIEF DESCRIPTION OF THE DRAWINGS

FIG. 1 is a conceptual diagram illustrating a communication system that provides a CAB service proposed by the Open Mobile Alliance (OMA) CAB group;
FIG. 2 is a flowchart illustrating a personal information restoration method based on a modification history information document in a communication system that provides a general CAB service;
FIG. 3 is an operational flowchart illustrating a new personal information restoration method according to a first embodiment of the present invention;
FIG. 4 is a block diagram illustrating XDCP Undo according to the first embodiment of the present invention;
FIG. 5 is an operational flowchart illustrating a modified personal information restoration method (XDCP Restore) according to a second embodiment of the present invention;
FIG. 6 is a block diagram illustrating XDCP Restore according to the second embodiment of the present invention; and
FIG. 7 is a block diagram illustrating a CAB client according to an embodiment of the present invention.

### DETAILED DESCRIPTION OF EMBODIMENTS OF THE PRESENT INVENTION

Hereinafter, operation principles of exemplary embodiments of the present invention will be described in detail with reference to accompanying drawings. In the following description, the same elements will be designated by the same reference numerals although they are shown in different drawings. Further, in the following description of the present invention, a detailed description of known functions and configurations incorporated herein will be omitted when it may make the subject matter of the present invention rather unclear. Then, terms described later are defined in consideration of the functions of the present invention, but may vary according to the intention or convention of a user or operator. Therefore, its definition will be made based on the overall contents of this specification.

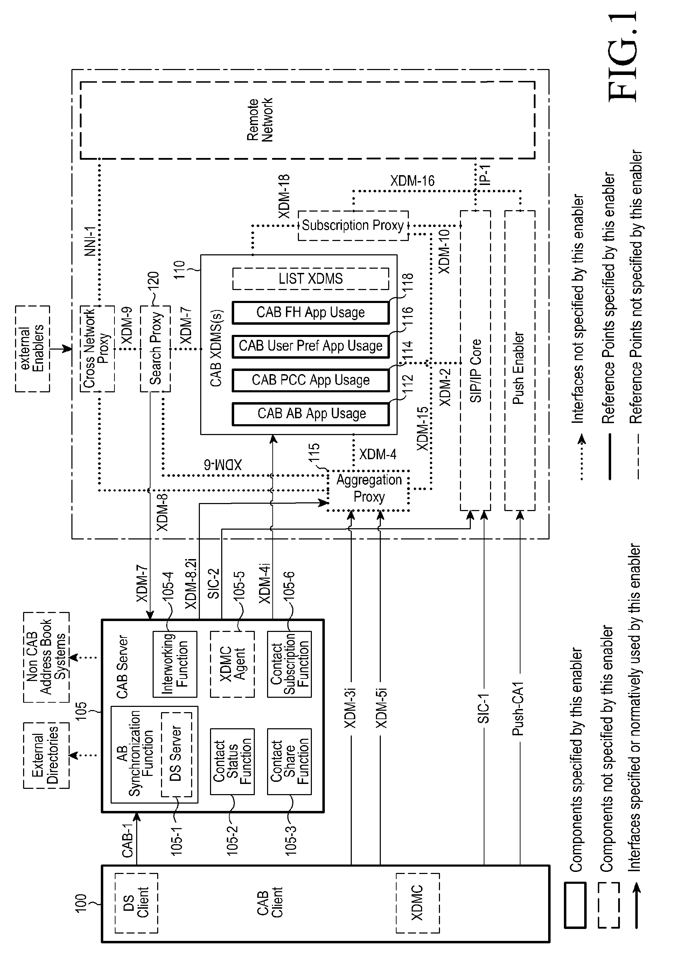

FIG. 1 is a conceptual diagram illustrating a communication system that provides a Converged Address Book (CAB) service proposed by the Open Mobile Alliance (OMA) CAB group.

Referring to FIG. 1, units specified by an enabler include a CAB client 100, a CAB server 105, and a CAB XDMS 110. The CAB XDM (XML Documents Manager)S 110 is formed of an Address Book App. Usage, a Personal Contact Card App. Usage, a CAB User Preference App. Usage, a CAB Feature Handler App. Usage, and the like.

The CAB client 100 communicates with the CAB server 105 through a terminal, authenticates a CAB user, synchronizes contact information, that is, personal profile information (Personal Contact Card (PCC)) and a converged address book stored in a network storage unit, and transmits, to the CAB server 105, demands made by the CAB user for, for example, address subscription, address searching, address sharing, interacting with an existing address book, managing user preference, or the like.

The CAB server 105 is a main network component in a CAB structure, and processes requests of the CAB user received from the CAB client 100. A main function of the CAB server 105 includes CAB client mutual authentication, storing a CAB address, synchronizing address information, and receiving an update of address information from the address subscription function and reflecting the same. Also, the CAB server 105 is a network component that reflects address subscription/sharing/translating and user preference/policy and the like, and includes an address subscription function that receives a number of times of a CAB user preference XML document and a request for subscription of a CAB user from a CAB user preference App. Usage, an address sharing function that applies personal preferences of data obtained through the address subscription and reflects the same to an address book, maintains subscription status information, and shares a PCC or a converged address book, and an interworking function that is associated with an existing address book system or exposures an interface to an external enabler, and the like. In addition, as an application usage (App. Usage) associated with the CAB enabler, an XDM server that manages data of a user includes a CAB AB App. Usage 112 that stores a converged address book and contact status, a CAB user Pref App. Usage 116 that manages preferences of a user, a CAB FH (Feature Handler) App. Usage 118 that manages a CAB service request/response, and a CAP PCC App. Usage 114 that stores PCC information. In addition to the above, an XDMC for accessing various App. Usage functions, a Session Initiation Protocol/Internet Protocol (SIP/IP) Core Network for message-routing with entities of an external domain, and a PUSH enabler for transferring notification messages of non-SIP terminals, and the like are included.

In particular, referring to FIG. 1, a main function of a general CAB service includes an address book synchronization function, contact subscription, contact sharing, contact searching, and the like.

### 1. Address book synchronization

First, in a case of the address book synchronization function, 1) when a CAB user modifies a local address stored in a corresponding terminal, the CAB client 100 transmits modified information to the CAB server 105 through a CAB-1 (SyncML) interface. Then, 2) an address book (AB) synchronization function 105-1 provided by the CAB server 105 reflects the modification of the local address book to the CAB AB App/Usage 112 corresponding to an XML document management server, through an XDM Agent 105-5. In this example, when formats between the CAB client 100 and the CAB AB App. Usage 112 are different from each other, translation occurs and thus, the translation into different forcats may cause a loss of data.

### 2. Contact subscription

In a case of the contact subscription function, 1) the CAB client 100 sends an XML Configuration Access Protocol (XCAP) request for contact subscription to the CAB User Pref App. Usage 116. 2) The CAB User Pref App. Usage 116 that receives the XCAP request adds, to a contact subscription list, a contact address obtained from the XCAP request. 3) The CAB User Pref App. Usage 116 informs a contact subscription function 105-6 of the CAB server 105, of a change of a document of the contact subscription list caused by the adding operation. 4) The contact subscription function 105-6 directly sends a contact subscription request for a PCC of a receiver from the contact subscription list to a domain of a reception side, directly or through a subscription proxy. 5) The CAB PCC App. Usage 116 that receives the contact subscription request determines access permission and user preferences with respect to the contact subscription request, and informs a receiver of a subscription result. 5) Also, in a case of an environment that does not support an SIP, a corresponding terminal and an enabler use an XDM Document Command Protocol (XDCP) and thus, the CAB client 100 may execute subscription to a corresponding address.

### 3. Contact sharing

In a case of a contact sharing function, 1) the CAB client 100 sends an XCAP request for sharing a contact, to a CAB FH App. Usage 118. 2) Then, the CAB FH App. Usage 118 adds a contact address obtained from the XCAP request and a reference of data to be shared to a CAB feature Handler. 3) The CAB FH App. Usage 118 informs a contact share function 105-3 of the CAB server 105, of a change of a document caused by adding the contact address obtained from the XCAP request and the reference of the data to be shared. 4) The contact share function 105-3 recognizes a contact status of a CAB AB App. Usage of the receiver based on the address of the receiver. 4-1) When the receiver is a CAB user, the contact share function 105-3 generates a contact sharing request, and transmits the contact sharing request to a desired server, for example, the CAB AB App. Usage 112 or the CAB PCC App. Usage 114, through an XDM Agent. A corresponding App. Usage that receives the contact sharing request sends the data to be shared to the receiver based on an XDM forward mechanism. 4-2) When the receiver is not a CAB user, the contact share function 105-3 receives data from, for example, the CAB AB App. Usage 112 or the CAB PCC App. Usage 114, transfers the received data to a CAB interworking function 105-4, requests format translation of the data into a legacy format, and sends the same to the receiver through a messaging enabler which is not illustrated in the drawings.

### 4. Contact search

In a case of a contact search function, 1) the CAB client 100 sends a contact search request for its AB or PCC or an AB or a PCC of a different domain by passing through an aggregation proxy 115/search proxy 120 of an XDM enabler. 2) Then, the contact search request is routed to a corresponding App. Usage by the search proxy 115, and the corresponding App. Usage transfers a search result to the CAB client 100. 3) Also, the CAB client 100 changes the contact search request into an external search request through the interworking function 105-4 in a case of an external directory search, sends the external search request to an external directory, changes an external search result received through the interworking function 105-4 again into a standard XML search result, and transfers the standard XML search result to the CAB client 100.

### 5. Fetch an external address book from a non-CAB system

In a case of the function, 1) the CAB client 100 sends an XCAP request for an importance of non-CAB data to the CAB FH App. Usage 118. 2) The CAB FH App. Usage 118 adds information obtained from the XCAP request, for example, a non-CAB source, a credential, and a scheduled interval, to a CAB feature Handler. 3) The CAB FH App. Usage 118 informs the interworking function 105-4 of the CAB server 105, of a change of a document caused by the adding operation to the CAB feature Handler. 4) The interworking function 105-4 obtains information associated with non-CAB address book data and stores the information in the CAB AB App. Usage 112 based on a CAB user preference, and instructs the CAB client 100 to start AB synchronization.

One of the methods proposed for restoring personal information provided based on a CAB service is to transfer a personal information restoring request to a CAB XDMS based on a modification history information document so as to change a corresponding document into a previous version.

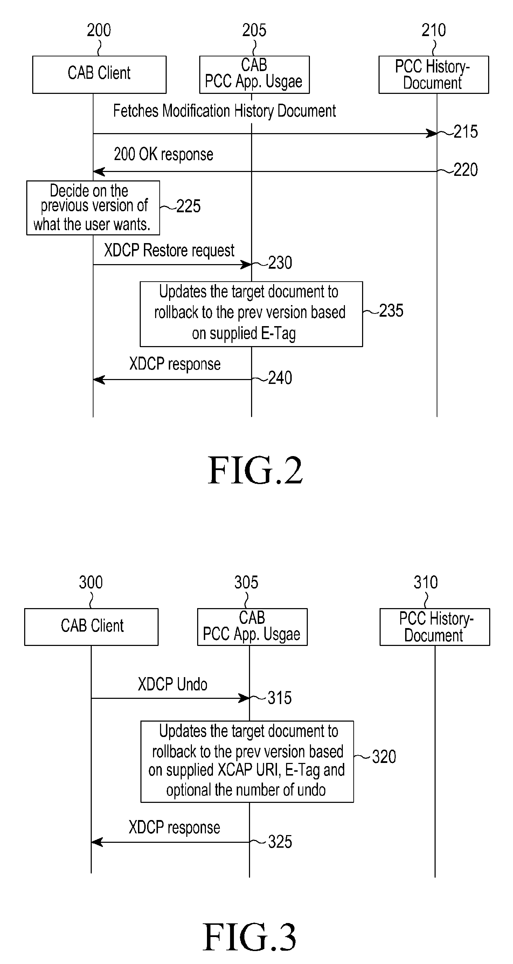

FIG. 2 is a flowchart illustrating a personal information restoration method based on a modification history information document in a communication system that provides a general CAB service. Here, descriptions will be provided by assuming that a main subject that performs the personal information restoring method includes, for example, a CAB client block 200, a CAB PCC Application Usage block 205, and a PCC history document block 215. Each of the blocks may be applied to the configuration of the communication system of FIG. 1. Each of the blocks may be embodied as a server or a device unit that performs a corresponding operation, and may be embodied by combining with at least one different block. Here, the PCC history document may be defined as a PCC and a personal information document stored for a converged address book stored in a network storage unit, for ease of description.

Referring to FIG. 2, in step 215, the CAB client block 200 requests a modification history information document including a modification from among PCC history documents stored in the PCC history document block 210, through the CAB PCC Application Usage block 205 for restoring, to a document directly before modification, a modified personal information XML document having history modified after being stored in the PCC history document block 210, and fetches the modification history information document. In step 220, the CAB client 200 receives, from the PCC history document block 210, a response message (200 OK) in response to the request for the modification history information document.

In step 225, a CAB user who obtains the modification history document through the CAB client block 200 may determine a document version information value (E-tag) for restoring the document to a previous version, based on the modification history document. In step 230, the CAB client block 200 transfers an XDCP restoration request including the previous document version information value (E-tag) to the CAB PCC Application Usage block 205. In step 235, the CAB PCC Application Usage block 205 restores the modification history information document to the previous version corresponding to the previous document version information value. In step 240, the CAB PCC Application Usage block 205 transmits the response message (200 OK) to the CAB client block 200.

As described above, when restoration of personal information is requested based on a modification history information document, the following problems may exist. Particularly, a cumbersome process for obtaining a PCC modification history document is required to obtain a previous document version information value. Also, the CAB user has inconvenience in that the CAB user needs to select a directly previous document version information value from a PCC modification history document. When the CAB user desires to determine a previous document version a few times, the CAB user needs to obtain a number of PCC modification history documents corresponding to a number of times of determination, which is inefficient.

Due to the above problems, a CAB enabler requires a method that enables a CAB user to more effectively restore (Undo) personal information such as changes (modification, addition, and deletion) applied in a PCC.

Therefore, the present invention defines a personal information restoration request to include a current version information value of a personal information XML document and information associated with a number of times of restoration. A method that may enable a user to effectively manage personal information may be provided by providing a method in which a server restores a document of a previous version in response to the personal information restoration request as defined above.

In particular, according to an embodiment of the present invention, there is provided a data transceiving method and system that may provide a high-speed communication service without a waste of resources, power, or memory in a communication system that supports a variety of types of communication services. Also, a data transceiving method and system for providing a CAB service to a user may be provided in the communication system.

In particular, embodiments of the present invention assume a case of restoring (undo) PCC information stored in a storage unit in a CAB system to a directly previous version of a current version. In this case, a personal information restoration request, including a current version information value of a personal information eXtensible markup language (XML) document corresponding to the PCC information and information associated with the number of times of restoration, is transmitted to a CAB PCC App. Usage in a CAB XDMS. The CAB PCC App. Usage block restores the personal information XML document of the current version to a document of a previous version of the current version information value obtained through the received personal information restoration request, a few times corresponding to the information associated with the number of times of restoration. A modification history information document of the personal information XML document before restoration is deleted, and a document of the restored previous version is stored. Subsequently, the document of the restored previous version is provided to a user as a result value of the restoration request and thus, an effective personal information managing method may be provided to a CAB user. Hereinafter, descriptions of embodiments of the present invention may be applied to the communication system described in FIG. 1.

Hereinafter, a first embodiment of the present invention provides a new personal information restoration method (XDCP Undo) that includes a current version information value of a personal information XML document that is to be restored based on a method of restoring a personal information document to a directly previous version, and information associated with a number of times of restoration.

FIG. 3 is an operational flowchart illustrating a new personal information restoration method according to the first embodiment of the present invention. Here, a main subject that performs the new personal information restoration method is illustrated as, for example, a CAB client block 300, a CAB PCC Application Usage block 305, and a PCC history document block 315. Each of the blocks may be applied to the configuration of the communication system of FIG. 1. Each of the blocks may be embodied as a server or a device that performs a corresponding operation, and may be embodied by combining with at least one different block. Here, a PCC history document may be defined as a PCC and a personal information document stored for a converged address book stored in a network storage unit, for ease of description.

Referring to FIG. 3, in step 315, the CAB client block 300 generates a new personal information restoration request message (hereinafter, referred to as 'XDCP Undo') including a current version information value (current -E-tag) of a personal information XML document to be restored and information associated with a number of times of restoration (number-of-undo), and transfers the generated XDCP Undo to the CAB PCC App. Usage block 305. In step S320, the CAB PCC App. Usage block 305 restores the target document to a previous version based on the current version information value and the number of times of restoration obtained from the XDCP Undo. In step S325, the CAB PCC App. Usage block 305 transfers, to the CAB client block 300, an XDCP response, in response to the XDCP Undo.

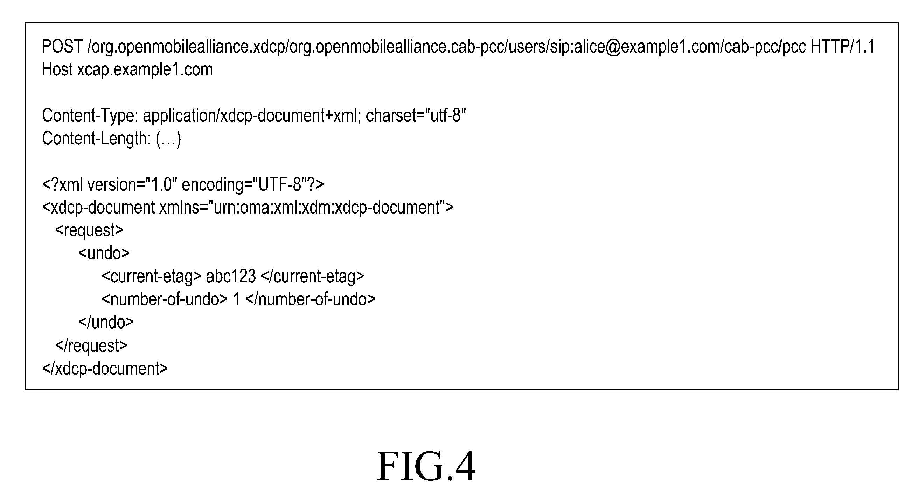

FIG. 4 is a block diagram illustrating the XDCP Undo according to the first embodiment of the present invention.

Referring to FIG. 4, the XDCP Undo defines <undo> elements for requesting restoration in a corresponding XDCP document, and defines the following sub-elements according to the first embodiment of the present invention

In particular, an '<current-etag>' element indicates a current version information value of a personal information XML document of a user. A '<number-of-undo>' element indicates information associated with a number of times of restoration of a personal information XML document required by a CAB user. The '<number-of-undo>' element is an optional value, and when the element is not included in a corresponding <undo> element, restoration of a personal information XML document one time is regarded as a default value. A maximum number of times of restoration may be managed based on a policy of a service provider.

In step 320, the CAB PCC App. Usage block 305 that receives the XDCP Undo as defined above performs the following procedure based on a document recognition value (XCAP Uniform Resource Indication (URI)), current-E-tag, and number-of-undo obtained from the XDCP Undo. First, the CAB PCC App. Usage block 305 checks a validity of <current-etag>, and although not illustrated, transfers an error message (HTTP 409 "Conflict") to the CAB client block 300 when it is invalid.

The CAB PCC App. Usage block 305 restores the personal information XML document to a previous version of the current-E-tag, a few times corresponding to number-of-undo. Although not illustrated, the CAB PCC App. Usage block 305 deletes a modification history document of the personal information XML document from PCC history documents stored in the PCC history document block 315. In step 325, the CAB PCC App. Usage block 305 transfers, to the CAB Client block 300, an XDCP response indicating a result of the restoration.

Hereinafter, a second embodiment of the present invention provides a modified personal information restoration method (XDCP Restore) that includes a current version information value of a personal information XML document that is to be restored based on a method of restoring a personal information document to a directly previous version, and information associated with a number of times of restoration. In a case of the second embodiment of the present invention, the method may enable restoration to a previous version and restoration to a predetermined version designated by a user.

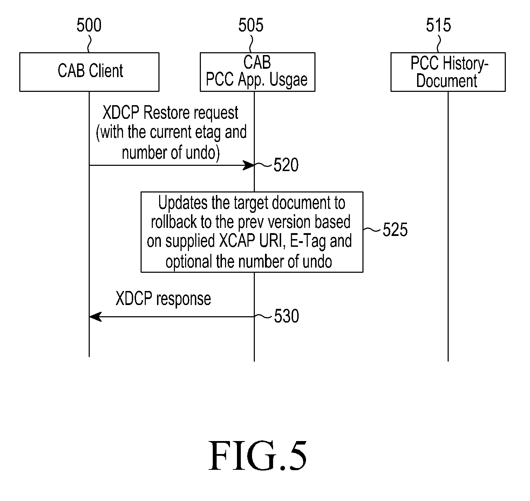

FIG. 5 is an operational flowchart illustrating a modified personal information restoration method (XDCP Restore) according to the second embodiment of the present invention. Here, a main subject that performs a new personal information restoration method is illustrated as, for example, a CAB client block 500, a CAB PCC Application Usage block 505, and a PCC history document block 515. Each of the blocks may be applied to the configuration of the communication system of FIG. 1. Each of the blocks may be embodied as a server or a device that performs a corresponding operation, and may be embodied by combining at least one different block. Here, a PCC history document may be defined as a PCC and a personal information document stored for a converged address book stored in a network storage unit, for ease of description.

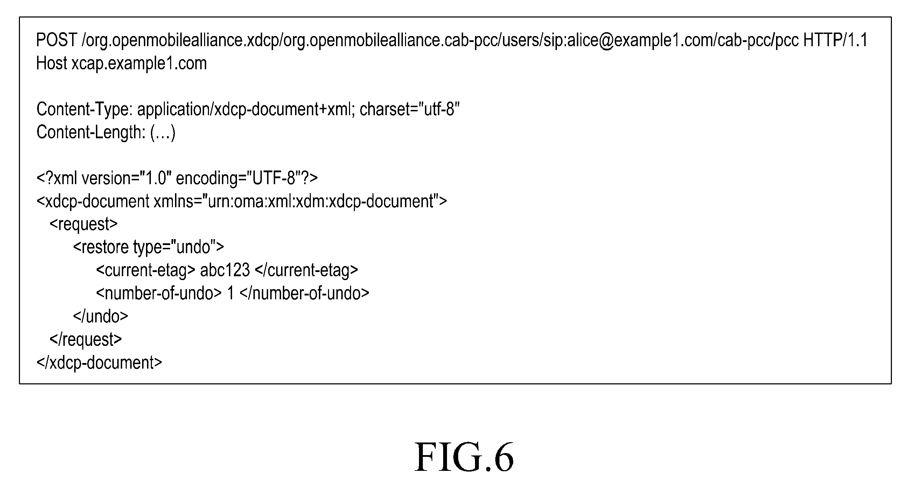

Referring to FIG. 5, in step 520, the CAB client 500 generates a modified personal information restoration request message (XDCP Restore request) including a current version information value (current-etag) of a personal information XML document to be restored and information associated with a number of times of restoration (number-of-undo), and transfers the generated message to the CAB PCC App. Usage block 505. FIG. 6 is a block diagram illustrating XDCP Restore according to the second embodiment of the present invention Referring to FIG. 6, the XDCP Restore defines a <restore> element first for requesting restoration in a corresponding XDCP, and defines the following sub-elements according to the second embodiment of the present invention.

In particular, a 'type' property is a value indicating a property of an <restore> element. Here, 'undo' that requests restoration of a personal information document to a directly previous version and 'restore' that requests restoration of a document to a predetermined version selected by a user may be defined. A <back-to-etag>' element includes an information value of a document version when the user requests restoration of a document to a predetermined version selected by the user. In this example, according to the second embodiment of the present invention, the 'type' property is 'undo' and thus, '<back-to-etag>' having a property of the <restore> element may not be included. That is, the <back-to-etag> element is an optional element. A '<current-etag>' element indicates a current version information value of a personal information XML document of the user. A '<number-of-undo>' element is an optional element, and indicates information associated with a number of times of restoration desired by the user. The '<number-of-undo>' element is an optional value, and restoration one time is regarded as a default value when it is not included in a corresponding <undo> element. A maximum number of times of restoration may be managed by a policy of a service provider.

In step 525, the CAB PCC App. Usage block 505 that receives the XDCP Restore request as defined above may perform the following procedure based on a document recognition value (XCAP URI), type information, <current-etag>, and <number-of-undo> obtained from the XDCP Restore request. For example, in FIG. 6, the XCAP URI corresponds to "org.openmobilealliance.xdcp/org.openmobilealliance.cab-pcc/users/sip:alice@examplel.com/cab-pcc/pcc". When it is determined that the property of 'type' is 'undo' from the XDCP Restore request, the CAB PCC App. Usage block 505 checks a validity of the information value of the current document version, that is, <current-etag>, and although not illustrated, transfers an error message (HTTP 409 "Conflict") to the CAB client block 500 when it is invalid. When the XDCP Restore request includes the information value (<back-to-etag>) of the target version, the CAB PCC App. Usage block 505 checks a validity of the information value (<back-to-etag>) of the target version, and transfers an error message (HTTP 409 "Conflict") to the CAB client block 500 when it is invalid.

When it is determined that the property of 'type' is 'undo' from the XDCP Restore request, the CAB PCC App. Usage block 505 restores the personal information XML document to a previous version of the current-E-tag, a few times corresponding to <number-of-undo>. Although not illustrated, the CAB PCC App. Usage block 505 deletes a modification history document of the personal information XML document from PCC history documents stored in the PCC history document block 515. In step 530, the CAB PCC App. Usage block 505 transfers, to the CAB Client block 500, an XDCP response indicating a result of the restoration.

Although the embodiments of the present invention provide a restoration method of restoring, to a previous version of a current version, a personal information XML document in which an error occurs from among personal information XML documents stored in a CAB system, the XDCP Undo and the modified XDCP Restore defined in the embodiments of the present invention may be equivalently applied to an XML document managing system.

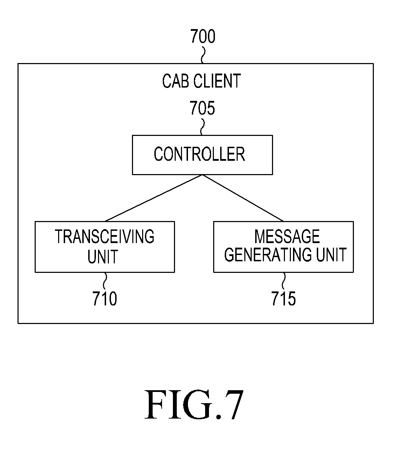

FIG. 7 is a block diagram illustrating a CAB client according to an embodiment of the present invention.

Referring to FIG. 7, the CAB client 700 includes a controller 705, a transceiving unit 710, and a message generating unit 715.

The controller 705 performs a control so that the message generating unit 715 generates a personal information restoration request message including a current version information value of a personal information XML document to be restored and information associated with a number of times of restoration according to an embodiment of the present invention. In particular, the message generating unit 715 generates XDCP Undo including <undo> elements or an XDCP Restore including <restore> elements as defined in FIG. 4 and FIG. 6 according to the first embodiment of the second embodiment of the present invention, based on an instruction of the controller 705. The message transceiving unit 710 transfers the generated XDCP Undo or the generated XDCP Restore to a CAB PCC App. Usage block, based on an instruction of the controller 705.

Although specific exemplary embodiments have been described in the detailed description of the present invention, various modifications may be made without departing from the scope of the present invention. Thus, the scope of the present invention shall not be determined merely based on the described exemplary embodiments and rather determined based on the accompanying claims and the equivalents thereto.

## Claims

1. A method of managing personal information in a communication system that provides a Converged Address Book (CAB) service, the method comprising:
generating, by a CAB user, a restoration request for restoring a personal document, which includes a document recognition value of a personal document stored in the CAB, current version information of the personal document, and property information instructing restoration of the personal document to a previous version of the current version;
transmitting, by the CAB user, the restoration request to a server that manages the CAB through an arbitrary device; and
receiving, by the CAB user, a response indicating that the personal document is restored to the previous version of the current version from the server through the arbitrary device.

2. The method of claim 1, wherein the restoration request optionally includes a number of times of restoration of the personal document.

3. The method of claim 2, wherein the response indicates that the personal document is restored to the previous version of the current version a few times corresponding to the number of times of restoration.

4. The method of claim 1, wherein the restoration request includes at least one of a number of times of restoration of the personal document, information associated with a predetermined version to which the personal document is to be restored, and information instructing restoration of the personal document to the predetermined version.

5. A method of managing personal information in a communication system that provides a Converged Address Book (CAB) service, the method comprising:
receiving, from a CAB user, a restoration request for restoring a personal document that is stored in the CAB in advance;
obtaining, from the restoration request, a document recognition value of the personal document, current version information of the personal document, and property information instructing restoration of the personal document to a previous version of the current version, and restoring the personal document to the previous version of the current version to correspond to the property information; and
informing the CAB user of a response indicating a restoration result through an arbitrary device.

6. The method of claim 5, wherein the restoration request further includes at least one of a number of times of restoration of the personal document, information indicating a predetermined version to which the personal document is to be restored, and information instructing restoration of the personal document to the predetermined version.

7. The method of claim 6, wherein the response indicates that the personal document is restored to the previous version of the current version a few times corresponding to the number of times of restoration.

8. The method of claim 5, wherein restoring the personal document to the previous version of the current version comprises:
deleting a modification history document associated with the personal document from personal profile information (Personal Contact Card (PCC)) history documents that are stored in advance.

9. An apparatus for managing personal information in a communication system that provides a Converged Address Book (CAB) service, the apparatus comprising:
a message generating unit to generate a restoration request for restoring a personal document, which includes a document recognition value of the personal document stored in the CAB, a current version of the personal document, property information instructing restoration of the personal document to a previous version of the current version, in response to an input by a CAB user;
a transmitting unit to transmit the restoration request to a server that manages the CAB through an arbitrary device by the CAB user; and
a receiving unit to receive, from the server, a response indicating that the personal document is restored to the previous version of the current version.

10. The method of claim 9, wherein the restoration request optionally includes a number of times of restoration of the personal document.

11. The apparatus of claim 10, wherein the response indicates that the personal document is restored to the previous version of the current version a few times corresponding to the number of times of restoration.

12. The apparatus of claim 9, wherein the restoration request includes at least one of a number of times of restoration of the personal document, information indicating a predetermined version to which the personal document is to be restored, and information instructing restoration of the personal document to the predetermined version.

13. An apparatus for managing personal information in a communication system that provides a Converged Address Book (CAB) service, the apparatus comprising:
a receiving unit to receive, from a CAB user, a restoration request for restoring a personal document that is stored in the CAB in advance;
a controller to obtain, from the restoration request, a document recognition value of the personal document, current version information of the personal document, and property information instructing restoration of the personal document to the previous version of the current version, and restoring the personal document to the previous version of the current version to correspond to the property information; and
a transmitting unit to inform the CAB user of a response indicating a restoration result through an arbitrary device.

14. The apparatus of claim 13, wherein the restoration request includes at least one of a number of times of restoration of the personal document, information indicating a predetermined version to which the personal document is to be restored, and information instructing restoration of the personal document to the predetermined version.

15. The apparatus of claim 14, wherein the response indicates that the personal document is restored to the previous version of the current version a few times corresponding to the number of times of restoration.

16. The apparatus of claim 13, wherein, when the personal document is restored to the previous version of the current version, the controller deletes a modification history document associated with the personal document from personal profile information (Personal Contact Card (PCC)) history documents that are stored in advance.
